Europäisches Patentamt

European Patent Office

Office européen des brevets

(11) Publication number: **0 265 522 B1**

# EUROPEAN PATENT SPECIFICATION

(45) Date of publication of patent specification: **23.06.93**　(51) Int. Cl.5: **C09D 175/04**, C09D 127/04

(21) Application number: **86902896.9**

(22) Date of filing: **30.04.86**

(86) International application number:
**PCT/JP86/00220**

(87) International publication number:
**WO 87/06600 (05.11.87 87/24)**

(54) **RESIN COMPOSITION FOR PAINT.**

(43) Date of publication of application:
**04.05.88 Bulletin 88/18**

(45) Publication of the grant of the patent:
**23.06.93 Bulletin 93/25**

(84) Designated Contracting States:
**DE FR GB IT SE**

(56) References cited:
**JP-A- 5 373 230**
**JP-A- 5 817 174**
**JP-A-58 176 207**

(73) Proprietor: **NIPPON BEE CHEMICAL CO., LTD.**
**14-1, Shodai-Otani 2-chome Hirakata-shi**
**Osaka 573(JP)**

Proprietor: **SAKAI CHEMICAL INDUSTRIAL**
**COMPANY LTD.**
**1-26, Oikecho 3-chome Suma-ku**
**Kobe-shi Hyogo 654(JP)**

(72) Inventor: **ASATO, Ikuo**
**1-3-1, Kohokucho**
Hirakata-shi Osaka 573(JP)
Inventor: **NAGATANI, Toshikazu**
**Otemae house 501 1-3-1, Funakoshicho**
**Higashi-ku, Osaka-shi Osaka 540(JP)**
Inventor: **INOUE, Akira**
**20-37, Chidorigaoka 3-chome**
**Tarumi-ku, Kobe-shi Hyogo 655(JP)**
Inventor: **FUKUYAMA, Isao**
**26-88, Yamatomi**
**Yumesakicho, Shikama-gun Hyogo**
**671-21(JP)**

(74) Representative: **Bankes, Stephen Charles Dig-**
**by et al**
**BARON & WARREN 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a modified chlorinated polyolefin type coating resin composition. More particularly, the present invention relates to a novel valuable coating composition which can be applied as a primer to a variety of materials, and a process for the preparation of this coating composition.

BACKGROUND ART

Various resin lacquers have been developed and utilized as surface coating materials for motor vehicles and the like. However, these lacquers have merits and demerits and have poor general-purpose properties. Recently, however, a modified chlorinated polyolefin lacquer has been developed and utilized as a lacquer having an excellent solvent resistance and general-purpose properties. As typical instances of the prior art, there can be mentioned Japanese Unexamined Patent Publication No. 58-176207 and Japanese Unexamined Patent Publication No. 60-1214. The latter Japanese Unexamined Patent Publication No. 60-1214 teaches that, in order to overcome defects of a chlorinated polyethylene lacquer having an excellent weatherability, chemical resistance, flame resistance, resistance against thermal aging, flexibility, sanitary characteristics, and electric characteristics, a modified chlorinated polyethylene formed by graft-polymerizing an unsaturated carboxylic acid or an anhydride thereof to chlorinated polyethylene is used. Chlorinated polyethylene per se has a poor adhesiveness to metals and alloys such as iron, aluminum and steel, polar polymers and inorganic materials such as mica and glass, but a modified chlorinated polyethylene formed by graft-polymerizing an unsaturated carboxylic acid to chlorinated polyethylene, has an improved adhesiveness to these materials.

However, this modified chlorinated polyolefin lacquer is defective in that the storage stability of the lacquer is poor because the graft polymer is crystallized at low temperatures.

In this lacquer, the unsaturated carboxylic acid or its anhydride is left unreacted at the reaction step.

In practice, it is difficult to completely remove the residual unsaturated carboxylic acid or anhydride from the lacquer. The unreacted unsaturated carboxylic acid produces a smell at the coating operation and this problem of smell generation is considered to be not negligible when carrying out the coating operation. The invention disclosed in the above-mentioned Japanese Unexamined Patent Publication No. 60-1214 relates to a reaction process in which any remaining unreacted unsaturated carboxylic acid is controlled as much as possible. Nevertheless, even if this process is adopted, it is impossible to completely remove the smell-producing unreacted unsaturated carboxylic acid from the coating composition.

Apart from this problem of smell generation, an improvement of the poor storage stability owing to crystallization of the graft polymer at low temperatures is not attained by either this prior invention or the invention of the above-mentioned Japanese Unexamined Patent Publication No. 58-176207.

Moreover, the coating compositions of these prior art techniques still have an unsatisfactory gasoline resistance, which is especially important for a primer for motor vehicles.

In accordance with the present invention, there is provided a coating resin composition comprising:

(a) the esterification product of a monohydric or polyhydric alcohol with:

(i) a graft copolymer of a chlorinated polyolefin, having a degree of chlorination of 10 to 50% and 1 to 20 wt.%, based on the chlorinated polyolefin, of a monobasic or dibasic, unsaturated carboxylic acid or its corresponding anhydride, and with

(ii) the remaining ungrafted unsaturated carboxylic acid or anhydride in the grafting reaction system of (i),

wherein the alcohol is used in an amount of 0.5 to 2 equivalents for each equivalent of carboxyl groups of the unsaturated carboxylic acid, and

(b) a urethane prepolymer which is a reaction product of a polyol and an isocyanate monomer or a derivative thereof, wherein the weight ratio of the solids of component (a) to the solids of component (b) is in the range from 10:90 to 90:10.

Furthermore, in accordance with the present invention, there is provided a process for the preparation of a coating resin composition, which comprises reacting 100 parts of a chlorinated polyolefin having a degree of chlorination of 10-50% with 1 to 20% by weight of an unsaturated carboxylic acid or an anhydride thereof in a reaction solvent so that the proportion of the non volatile portion in the reaction system is adjusted to 10 to 50% by weight, mixing 100 parts of the obtained unsaturated carboxylic acid-grafted chlorinated polyolefin with a monohydric or polyhydric alcohol in an amount of 0.5 to 2 equivalents to the carboxyl groups of the unsaturated carboxylic acid to esterify the grafted unsaturated carboxylic acid and the ungrafted unsaturated carboxylic acid in the grafting reaction system, separately forming a urethane prepolymer by reaction of a polyol with an isocyanate, and mixing the composition of the grafting and

2

esterification reaction system with the composition of the prepolymer-forming reaction system so that the weight ratio of the solids of the grafting and esterification reaction system to the solids of the prepolymer-forming reaction system is in the range of from 90/10 to 10/90.

The first characteristic feature of the present invention resides in that, after an unsaturated carboxylic acid is graft-polymerized to a chlorinated polyolefin, esterification is carried out with an alcohol. By this esterification, not only the grafted unsaturated carboxylic acid but also the unsaturated carboxylic acid left unreacted at the grafting step is esterified. Accordingly, the volatilization temperature of the unsaturated carboxylic acid is elevated and, hence, the problem of smell generation, which has been a hindrance to the operation, can be prevented.

The second characteristic feature of the present invention resides in that by the above-mentioned esterification, there can be unexpectedly attained an effect of improving the compatibility of the modified chlorinated polyolefin coating composition and, hence, a known urethane prepolymer composition which is used as a primer for a polyolefin material, for example as disclosed in Japanese Unexamined Patent Publication No. 60-186538 can be effectively mixed with this modified chlorinated polyolefin coating composition. By this mixing, the crystallization temperature of the modified chlorinated polyolefin resin can be lowered and, hence, the storage stability of this resin at low temperatures can be improved while retaining the excellent characteristics of this resin. Although the storage of conventional lacquers in winter requires a warm storehouse, in the case of the coating composition of the present invention, such a special measure becomes unnecessary.

The gasoline resistance is prominently improved by the synergistic effect of the esterified modified chlorinated polyolefin resin with the urethane prepolymer. Furthermore, the adhesion characteristics of both compositions to various materials can be fully achieved without interference. Thus, it has been confirmed that the coating composition of the present invention shows an excellent adhesion to not only polyolefin materials but also non-polar resins, polar resins such as polyamides, PBT, PET, polyphenylene oxide, RIM, SMC, BMC, FRP and ABS, metals such as iron, aluminum, copper, lead, zinc, tin and nickel, alloys such as stainless steel and brass, and other inorganic substances.

Preferably, the chlorination degree of the chlorinated polyolefin used in the present invention 20 to 40%.

As typical instances of the polyolefin, there can be mentioned homopolymers and copolymers of ethylene, propylene, 1-butene and 3-methyl-1-butene. The carbon number of the unsaturated carboxylic acid is preferably not more than 15. In view of the effect of improving the gasoline resistance, a dibasic acid or an anhydride thereof is preferred as the unsaturated carboxylic acid. The amount of the unsaturated carboxylic acid is 1 to 20% by weight, preferably 5 to 15% by weight, based on the chlorinated polyolefin. If the amount of the unsaturated carboxylic acid is smaller than 1% by weight, the solvent resistance is insufficient, and if the amount of the unsaturated carboxylic acid exceeds 20% by weight, the adhesion to a polyolefin material is degraded, and since the solution becomes gelatious, the composition is not preferred as a lacquer.

As the alcohol for the esterification, there can be mentioned monohydric alcohols such as methanol and ethanol and polyhydric alcohols such as ethylene glycol and glycerol. These alcohols may be used singly or in the form of mixtures of two or more thereof.

As the polyol for formation of the urethane prepolymer, there may be used polyols having at least two OH groups in the molecule, such as polyethylene glycol, polytetramethylene glycol, and OH group-containing isoprene.

As the isocyanate, there may be used isocyanate monomers and derivatives such as hexamethylene diisocyanate (HMDI), tolylene isocyanate (TDI), and diphenylmethane diisocyanate (MDI). Preferably, the polyol and isocyanate are incorporated in amounts such that the molar ratio of the OH groups to the NCO groups is in the range of from 10/1 to 10/7.

The unsaturated carboxylic acid-grafted chlorinated polyolefine should be mixed with the urethane prepolymer so that the weight ratio of the solids of the composition of the esterified graft polymer and esterification product to the solids of the urethane prepolymer composition is in the range of from 10/90 to 90/10, preferably from 60/40 to 90/10. If this mixing ratio is in the range of from 10/90 to 60/40, the adhesion to a polyolefin material is relatively low.

Preferably, the grafting reaction is carried out by using a radical polymerization initiator in which the half-value period at 100°C is 0.1 to 20 hours. An organic peroxide in which the half-value period at 100°C is 0.2 to 10 hours is especially preferred as the initiator. For example, there can be mentioned benzoyl peroxide, dilauryl peroxide, and diacetyl peroxide.

In order to shorten the reaction time and reduce the manufacturing cost, preferably an amine such as triethylamine or an organic tin compound such as dibutyltin dilaurate is used as a urethanation catalyst for the urethane prepolymer-forming reaction.

The resin composition of the present invention obtained under the above-mentioned conditions has the following excellent characteristics as a lacquer, especially as a primer.

1. The solvent resistance is good.

2. A high gasoline resistance is attained.

3. The storage stability at low temperatures is good.

4. Smell generation is controlled.

5. A good adhesion is achieved to not only polyolefin materials but also metals and polar group-containing plastic materials.

6. The steps for synthesizing the resin are very simple (vacuum removal of the residual monomer is not necessary).

7. All the pigments may be used as in case of ordinary coloring lacquers, and coloration of the resin composition is possible.

Samples used for Examples 1 through 7 according to the present invention and Comparative Examples 1 through 3 were prepared according to the following processes.

Production Examples A through E are examples illustrating the production of unsaturated carboxylic acid-grafted chlorinated polyolefin composition samples by the grafting reaction or by the grafting and esterification reaction.

Production Example A

A 4-neck flask equipped with a stirring rod, a thermometer and a cooling condenser, and having a capacity of 1000 ml was charged with 210 g of xylene and 90 g of chlorinated polypropylene having a chlorination degree of 29%, and the mixture was heated with stirring. When the temperature was elevated to 80°C, 5.4 g of maleic anhydride was added and uniformly dissolved. Then, 0.3 g of B.P.O. was added and the mixture was maintained at 85 to 90°C for 3 hours. Then, 0.3 g of B.P.O. was further added and the mixture was maintained at the same temperature for 3 hours. The temperature was then lowered to 80°C and 350 g of toluene and 7 g of ethyl alcohol were added, and the mixture was maintained at 80 to 85°C for 5 hours to complete the reaction.

In Production Examples B, C, D and E, synthesis was carried out in the same manner as described above in Production Example A. The components used in these Production Examples are shown in Table I.

Table I

| | Production Example A | Production Example B | Production Example C | Production Example D | Production Example E |
|---|---|---|---|---|---|
| Chlorinated polypropylene | 13.6 | 16.1 | 17.3 | 11.2 | 16.1 |
| (Chlorination degree) | (29%) | (24%) | (48%) | (17%) | (24%) |
| Maleic anhydride | 0.81 | 1.61 | 2.60 | | 1.61 |
| Methacrylic acid | | | | 1.12 | |
| B.P.O. | 0.09 | 0.16 | 0.26 | 0.11 | 0.16 |
| Ethanol | 1.10 | | 1.74 | | |
| Ethylene glycol | | 1.13 | | | |
| Xylene | 31.7 | 47.5 | 43.4 | 47.8 | 47.5 |
| Toluene | 52.7 | 33.5 | 34.7 | 39.8 | 33.5 |
| Total | 100.0 | 100.0 | 100.0 | 100.03 | 98.87 |

Production Example F through H are examples illustrating the production of urethane prepolymer composition samples. These samples were prepared according to the following procedures.

Production Example F

A 4-neck flask equipped with a stirring rod, a thermometer and a cooling condenser, and having a capacity of 1000 ml was charged with 263 g of toluene and 80.7 g of liquid polyisoprene having at least two OH groups in the molecule and the mixture was heated with stirring. When the temperature was elevated to 80°C, 6.1 g of 4,4'-diphenylmethane diisocyanate was added and 0.3 g of a 10% toluene solution of dibutyltin dilaurate was added. The temperature was then elevated to 90°C and this temperature was maintained for 4 hours to complete the reaction. In Production Examples G and H, synthesis was carried out in the same manner as described above in Production Example F. The components used in these Production Examples are shown in Table 11.

Table II

|  | Production Example F | Production Example G | Production Example H |
|---|---|---|---|
| OH-containing polyisoprene | 23.1 | 34.7 | |
| PTMG 1000 | | | 12.3 |
| MDI | 1.74 | 1.74 | 0.86 |
| 10% Toluene solution of dibutyltin dilaurate | 0.09 | 0.09 | 0.04 |
| Toluene | 75.1 | 40.4 | 86.8 |
| Total | 100.03 | 100.03 | 100.0 |
| OH/NCO | 10/5 | 10/3.3 | 10/2.5 |

The above-mentioned samples (Production Examples A through H) were mixed at a predetermined ratio (shown in Table III), and the mixture was blended at room temperature for about 10 to about 30 minutes by using an ordinary stirrer such as a disperser to form a homogeneous composition.

Test plates were prepared according to the following procedures.

1. Substrate: substrate used in the example
2. Pretreatment: degreasing and wiping with IPA
3. Primer: the above composition
4. Coating method: air-spray coating
5. Coating thickness: 15 $\mu$m
6. Setting: 15 minutes (room temperature)
7. Top-coating:
   1) Two-pack urethane lacquer: R-263 (supplied by Nippon Bee Chemical)
   2) Coating method: air-spray coating method
   3) Coating thickness: 35 $\mu$m
   4) Baking conditions: 90°C x 30 minutes

The test plates obtained in Examples 1 through 7 and Comparative Examples 1 through 3 were tested according to specific methods. The conditions and results are summarized in Table III. In Table III, mark "o" indicates that the plate passed the test, mark "x" indicates that the plate did not pass the test, and mark "△" indicates that the plate narrowly passed the test.

The tests were carried out in the same manner as in the Example and Comparative Examples except that a one-pack melamine baking type lacquer was used as the top-coating lacquer. The obtained results were substantially the same as those shown in Table III.

Table III

| | Example 1 | Example 2 | Example 3 | Example 4 | Example 5 | Example 6 | Example 7 | Comparative Example 1 | Comparative Example 2 | Comparative Example 3 | Test Methods | Evaluation Methods |
|---|---|---|---|---|---|---|---|---|---|---|---|---|
| Production Example A | 100 | | 100 | | | | 100 | 100 | | | | |
| Production Example B | | 100 | | | | | | | | | | |
| Production Example C | | | | 100 | | | | | | | | |
| Production Example D | | | | | 100 | 100 | | | | | | |
| Production Example E | | | | | | | | | 100 | | | |
| Production Example F | 30 | 20 | 10 | | | | 70 | | | 100 | | |
| Production Example G | | | | 10 | 5 | | | | | | | |
| Production Example H | | | | | | 70 | | | | | | |
| Unsaturated modified polyolefin/methane prepolymer | 66/44 | 78/22 | 85/15 | 85/15 | 87/13 | 57/43 | 45/55 | 100/0 | 100/0 | 0/100 | | |
| Volatile oil resistance | o | o | o | o | o | o | o | o | o | x | JISK5400.7.7 | no change after 5 hours at 20°C |
| Gasoline resistance | o | o | o | o | o | o | o | o | o | x | immersion in gasoline having high octane value | no change after 5 hours at 20°C |
| Storage stability at low temperature | o | o | Δ | Δ | Δ | o | o | x | x | o | stored at -25°C for 1 month | not solidified |
| Smell | o | o | o | o | x | x | o | o | x | o | smell at 80°C | not stimulative to mucosa |

Table III (Continued)

| | | Example 1 | Example 2 | Example 3 | Example 4 | Example 5 | Example 6 | Example 7 | Comparative Example 1 | Comparative Example 2 | Comparative Example 3 | Test Methods | Evaluation Methods |
|---|---|---|---|---|---|---|---|---|---|---|---|---|---|
| Adhesion to Typical Materials | dull plate (iron) | o | o | o | o | o | o | o | o | o | x | | |
| | aluminum | o | o | o | o | o | x | x | o | o | x | 40°C x 240 hours | |
| | stainless steel | o | o | o | o | o | o | x | o | o | x | after immersion in warm water | not peeled |
| | polypropylene | o | o | o | o | o | o | o | o | o | x | JISK5400.6.15 | |
| | SMC | o | o | o | o | o | o | o | o | o | x | | |
| | PBT | o | o | o | o | o | o | o | o | o | x | | |
| | nylon | o | o | o | o | o | o | o | o | o | x | | |

Solvent Resistance Test Results of Coating Compositions of Examples and Comparative Examples

The solvent resistance test was carried out according to the method shown in Table III and the test was conducted until the critical value was obtained. The obtained results are shown in Table IV. From these results, it is seen that the coating resin composition of the present invention has a remarkably superior gasoline resistance to the modified chlorinated polyolefin (Comparative Example 2) and the esterification product thereof (Comparative Example 1), and therefore, the coating resin composition of the present invention is superior.

Table IV

| | Volatile Oil Resistance | Gasoline Resistance |
|---|---|---|
| Example 1 | more than 24 hours | more than 24 hours |
| Example 2 | more than 24 hours | more than 24 hours |
| Comparative Example 1 | more than 24 hours | 16 hours |
| Comparative Example 2 | more than 24 hours | 16 hours |

## Claims

1. A coating resin composition comprising:
   (a) the esterification product of a monohydric or polyhydric alcohol with:
      (i) a graft copolymer of a chlorinated polyolefin, having a degree of chlorination of 10 to 50% and 1 to 20 wt.%, based on the chlorinated polyolefin, of a monobasic or dibasic, unsaturated carboxylic acid or its corresponding anhydride, and with
      (ii) the remaining ungrafted unsaturated carboxylic acid or anhydride in the grafting reaction system of (i),
      wherein the alcohol is used in an amount of 0.5 to 2 equivalents for each equivalent of carboxyl groups of the unsaturated carboxylic acid, and
   (b) a urethane prepolymer which is a reaction product of a polyol and an isocyanate monomer or a derivative thereof, wherein the weight ration of the solids of component (a) to the solids of component (b) is in the range from 10:90 to 90:10.

2. A resin composition as claimed in claim 1, wherein the urethane prepolymer is a reaction product of the polyol and the isocyanate monomer in amounts such that the molar ratio of OH groups to NCO groups is in the range from 10:1 to 10:7.

3. A resin composition as claimed in claim 1 or claim 2, wherein the weight ratio of the solids of the composition of the esterified graft polymer and the esterification product to the solids of the urethane prepolymer composition is in the range of from 60/40 to

4. A resin composition as claimed in any preceding claim, wherein the chlorinated polyolefin is a chlorination product of a polyolefin selected from homopolymers and copolymers of ethylene, propylene, 1-butene and 3-methyl-1-butene.

5. A resin composition as claimed in any preceding claim, wherein the unsaturated carboxylic acid has up to 15 carbon atoms.

6. A resin composition as claimed in claim 5, wherein the unsaturated carboxylic acid component is a dibasic carboxylic acid or an anhydride thereof.

7. A process for the preparation of a coating resin composition, which comprises reacting 100 parts of a chlorinated polyolefin having a degree of chlorination of 10-50% with 1 to 20% by weight of an unsaturated carboxylic acid or an anhydride thereof in a reaction solvent so that the proportion of the non volatile portion in the reaction system is adjusted to 10 to 50% by weight, mixing 100 parts of the obtained unsaturated carboxylic acid-grafted chlorinated polyolefin with a monohydric or polyhydric alcohol in an amount of 0.5 to 2 equivalents to the carboxyl groups of the unsaturated carboxylic acid to esterify the grafted unsaturated carboxylic acid and the ungrafted unsaturated carboxylic acid in the grafting reaction system, separately forming a urethane prepolymer by reaction of a polyol with an isocyanate, and mixing the composition of the grafting and esterification reaction system with the composition of the prepolymer-forming reaction system so that the weight ratio of the solids of the grafting and esterification reaction system to the solids of the prepolymer-forming reaction system is in

9

the range of from 90/10 to 10/90.

**8.** A preparation process according to claim 7, wherein the molar ration of OH groups of the polyol to the NCO groups of the isocyanate in the prepolymer-forming reaction system is in the range of from 10/1 to 10/7.

**9.** A preparation process according to claim 7 or claim 8, wherein the grafting reaction is carried out using a radical polymerization initiator in which the half-value period at 100°C is 0.1 to 20 hours.

**Patentansprüche**

**1.** Harzbeschichtungszusammensetzung umfassend:
(a) das Veresterungsprodukt eines einwertigen oder mehrwertigen Alkohols mit:
(i) einem Pfropfpolymer eines chlorierten Polyolefins mit einem Chlorierungsgrad von 10 bis 50% und 1 bis 20 Gew.-%, bezogen auf das chlorierte Polyolefin, einer monobasischen oder dibasischen ungesättigten Carbonsäure oder ihres entsprechenden Anhydrids, und mit
(ii) der verbleibenden ungesättigten Carbonsäure oder dem Anhydrid in dem Pfropfreaktionssystem aus (i),
worin der Alkohol in einer Menge von 0,5 bis 2 Äquivalenten auf jedes Carboxylgruppenäquivalent der ungesättigten Carbonsäure angewandt wird, und
(b) ein Urethanpolymer, welches das Reaktionsprodukt eines Polyols und eines Isocyanatmonomers oder eines Derivates desselben ist, worin das Gewichtsverhältnis der Feststoffe des Bestandteils (a) zu den Feststoffen des Bestandteils (b) im Bereich vom 10:90 bis 90:10 ist.

**2.** Harzzusammensetzung wie in Anspruch 1 beansprucht, worin das Urethanpräpolymer das Reaktionsprodukt des Polyols und des Isocyanatmonomers in solchen Mengen ist, daß das Molverhältnis von OH-Gruppen zu NCO-Gruppen im Bereich von 10:1 bis 10:7 ist.

**3.** Harzzusammensetzung wie in Anspruch 1 oder Anspruch 2 beansprucht, worin das Gewichtsverhältnis der Feststoffe der Zusammensetzung des veresterten Pfropfpolymers und des Veresterungsprodukts zu den Feststoffen der Urethanpräpolymerzusammensetzung im Bereich von 60/40 bis 90/10 ist.

**4.** Harzzusammensetzung wie in einem der vorstehenden Ansprüche beansprucht, worin das chlorierte Polyolefin das Chlorierungsprodukt eines aus Homopolymeren und Copolymeren von Ethylen, Propylen, 1-Buten und 3-Methyl-1-buten ausgewählten Polyolefins ist.

**5.** Harzzusammensetzung wie in einem der vorstehenden Ansprüche beansprucht, worin die ungesättigte Carbonsäure bis zu 15 Kohlenstoffatome besitzt.

**6.** Harzzusammensetzung wie in Anspruch 5 beansprucht, worin der ungesättigte Carbonsäurebestandteil eine dibasische Carbonsäure oder ein Anhydrid derselben ist.

**7.** Verfahren zur Herstellung einer Beschichtungszusammensetzung, welches das Umsetzen von 100 Teilen eines chlorierten Polyolefins mit einem Chlorierungsgrad von 10 bis 50% mit 1 bis 20 Gew.-% einer ungesättigten Carbonsäure oder einem Anhydrid derselben in einem Reaktionslösungsmittel, in der Weise, daß das Verhältnis des nichtflüchtigen Anteils im Reaktionssystem auf 10 bis 50 Gew.-% eingestellt ist, das Vermischen von 100 Teilen des erhaltenen mit einer ungesättigten Carbonsäure gepfropften chlorierten Polyolefins mit einem einwertigen oder mehrwertigen Alkohol in einer Menge von 0,5 bis 2 Äquivalenten auf die Carboxylgruppen der ungesättigten Carbonsäure, um die gepfropfte ungesättigte Carbonsäure und die ungepfropfte ungesättigte Carbonsäure in dem Pfropfreaktionssystem zu verestern, das getrennte Bilden eines Urethanpräpolymers durch Reaktion eines Polyols mit einem Isocyanat, und das Vermischen der Zusammensetzung aus dem Pfropf- und Veresterungsreaktionssystem mit der Zusammensetzung des das Präpolymer bildenden Reaktionssystems, in der Weise umfaßt, daß das Gewichtsverhältnis der Feststoffe des Pfropf- und Veresterungsreaktionssystems zu den Feststoffen des das Präpolymer bildenden Systems im Bereich von 90/10 bis 10/90 ist.

**8.** Herstellungsverfahren gemäß Anspruch 7, wobei das Molverhältnis der OH-Gruppen des Polyols zu den NCO-Gruppen des Isocyanats in dem das Präpolymer bildenden Reaktionssystem im Bereich von

EP 0 265 522 B1

10/1 bis 10/7 ist.

9. Herstellungsverfahren gemäß Anspruch 7 oder Anspruch 8, wobei die Pfropfreaktion mittels eines Radikalpolymerisationsinitiators durchgeführt wird, dessen Halbwertszeit bei 100° C 0,1 bis 20 Stunden beträgt.

**Revendications**

1. Composition de résine de revêtement comprenant:
   (a) le produit d'estérification d'un monoalcool ou d'un polyalcool avec
      (i) un copolymère greffé d'une polyoléfine chlorée, ayant un degré de chloration de 10 à 50%, et de 1 à 20% en poids, par rapport à la polyoléfine greffée, d'un acide carboxylique monobasique ou dibasique insaturé ou de l'anhydride correspondant,
      et avec
      (ii) l'acide ou anhydride carboxylique insaturé restant à l'état non greffé dans le système de la réaction de greffage de (i),
      dans lequel l'alcool est utilisé dans une proportion de 0,5 à 2 équivalents pour chaque équivalent de groupements carboxyle de l'acide carboxylique insaturé, et
      (b) un prépolymère d'uréthane qui est un produit de réaction d'un polyol et d'un isocyanate monomère ou d'un dérivé de celui-ci,
      le rapport en poids des matières solides du composant (a) aux matières solides du composant (b) se situant dans la gamme de 10:90 à 90:10.

2. Composition de résine selon la revendication 1, dans laquelle le prépolymère d'uréthane est un produit de réaction du polyol et de l'isocyanate monomère dans des quantités telles que le rapport molaire des groupements OH aux groupements NCO se situe dans la gamme de 10:1 à 10:7.

3. Composition de résine selon la revendication 1 ou 2, dans laquelle le rapport pondéral des matières solides de la composition du polymère greffé estérifié et du produit d'estérification aux matières solides de la composition de prépolymère d'uréthane se situe dans la gamme de 60:40 à 90:10.

4. Composition de résine selon l'une quelconque des revendications 1 à 3, dans laquelle la polyoléfine chlorée est un produit de chloration d'une polyoléfine choisie parmi les homopolymères et copolymères d'éthylène, de propylène, de 1-butène et de 3-méthyl-1-butène.

5. Composition de résine selon l'une quelconque des revendications 1 à 4, dans laquelle l'acide carboxylique insaturé renferme jusqu'à 15 atomes de carbone.

6. Composition de résine selon la revendication 5, dans laquelle le composant acide carboxylique insaturé est un acide carboxylique dibasique insaturé ou un anhydride de celui-ci.

7. Procédé de préparation d'une composition de résine de revêtement, comprenant les étapes consistant à faire réagir 100 parties d'une polyoléfine chlorée, ayant un degré de chloration de 10 à 50%, avec 1 à 20% en poids d'un acide carboxylique insaturé ou d'un anhydride de celui-ci dans un solvant de réaction, de sorte que la proportion de la fraction non volatile dans le système réactionnel soit réglée à 10 à 50% en poids, à mélanger 100 parties de la polyoléfine chlorée, greffée par l'acide carboxylique insaturé ainsi obtenue, avec un monoalcool ou un polyalcool dans une proportion de 0,5 à 2 équivalents par équivalent de groupements carboxyle de l'acide carboxylique insaturé, afin d'estérifier l'acide carboxylique insaturé greffé et l'acide carboxylique insaturé non greffé contenus dans le système de réaction de greffage, à former séparément un prépolymère d'uréthane par réaction d'un polyol avec un isocyanate, et à mélanger la composition du système des réactions de greffage et d'estériication avec la composition du système de la réaction de formation du prépolymère, de sorte que le rapport pondéral des matières solides du système des réactions de greffage et d'estérification aux matières solides du système de la réaction de formation du prépolymère se situe dans la gamme de 90:10 à 10:90.

8. Procédé de préparation selon la revendication 7, dans lequel le rapport molaire des groupements OH du polyol aux groupements NCO de l'isocyanate dans le système de la réaction de formation du

11

prépolymère se situe dans la gamme de 10:1 à 10:7.

9. Procédé de préparation selon la revendication 7 ou 8, dans lequel la réaction de greffage est conduite en utilisant un initiateur radicalaire de polymérisation dont le temps de demi-réaction à 100°C est de 0,1 à 20 h.